# EUROPEAN PATENT SPECIFICATION

(11) **EP 2 185 038 B1**
(45) Date of publication and mention of the grant of the patent: **24.04.2013**
(21) Application number: 07867425.6
(22) Date of filing: 15.11.2007
(51) Int. Cl.: A47C 27/14

(54) **IMPROVED CUSHIONING APPARATUS**
VERBESSERTE POLSTERVORRICHTUNG
COUSSIN PERFECTIONNÉ

(30) Priority: 02.07.2007 US 824646
(43) Date of publication of application: 19.05.2010
(73) Proprietor: Sinomax Enterprises, Ltd., Kowloon (HK)
(72) Inventor: CHEN, Feng, Baton Rouge, LA 70808 (US); MANDLE, Alan, J., Hickory, NC 28601 (US)
(74) Representative: Khan, Mohammed Saiful Azam
(86) International application number: PCT/US2007/023799
(87) International publication number: WO 2009/005514

(56) References cited:
- EP-A2- 0 878 150
- WO-A1-97/45038
- US-A- 5 189 747
- US-A- 5 360 653
- US-A1- 2004 133 987
- US-A1- 2005 278 852
- US-B1- 6 957 465
- US-B2- 7 051 389

## Description

### A. BACKGROUND OF THE INVENTION

### Technical Field.

This invention relates to bedding and seating assemblies in general and to an improved cushioning apparatus that can be permanently or detachably affixed as a cover, topper, on mattresses, chairs, stools, and the like, in particular.

### Background Art.

Covers, toppers, pads, etc. for use on mattress, chairs, stools, sofas, benches, and the like, for protecting the underlying surface, as well as for providing enhanced user comfort, are well known in the prior art; however, there remains a need for their improvement. In the prior art, many such covers comprise filler material in the form of bulky unitary solid slabs that restrict airflow and retain heat, adversely affecting the user's comfort. Furthermore, such solid slab filler materials often give the covers the appearance of being bulky and overweight. And although there exist duvet-style covers, comprising individual pockets of filler material, that are more aesthetically pleasing and provide greater comfort, these type of covers have their own limitations. For example, the pocket filler materials often used in such duvet-style covers comprise materials such as polyester fibers or feathers which are not very pressure sensitive and do not optimally conform to a user's body contours. Therefore, an improved cushioning apparatus to serve as a topper or cover for mattresses, chair, seats, stools, and the like, and meeting the following objectives would be highly desirable in the industry.

EP0878150 discloses an inflatable support (e.g. a mattress or seat cushion) comprises a plurality of elongate inflatable cells containing a solid deformable material such as resilient foam, beads or fibres. Typically, the cells are inflated and deflated periodically by means of a pump (P).

US6957465 discloses a mattress pad positionable atop a rectangular mattress. The mattress pad includes a flexible bottom sheet having a size and shape substantially similar to that of a top surface of the mattress. A plurality of generally side-by-side body supporting chambers are each defined by peripheral stitching and spaced lines of continuous stitching which interconnect the top and bottom sheets. Each chamber is filled with a loose stuffing of fibrous or synthetic material which is movable within the chamber and capable of localized accumulation within the chamber by manual body or hand manipulating pressure against the top sheet.

### B. OBJECTS OF THE INVENTION

It is an object of embodiments disclosed herein to provide an improved cushioning apparatus that overcomes the deficiencies in the prior part.

It is yet another object of embodiments disclosed herein to provide an improved duvet-style cushioning apparatus having a plurality of pockets containing an improved filler material designed to provide maximum comfort for the user.

It is an object of embodiments disclosed herein to provide an improved cushioning apparatus having improved filler material comprising granular viscoelastic foam.

It is another object of embodiments disclosed herein to provide an improved cushioning apparatus that can be detachably or permanently affixed as a cover or topper on mattresses and/or box spring combinations, chairs, stools, benches and the like.

It is another object of embodiments disclosed herein to provide an improved cushioning apparatus that can be incorporated into a mattress structure to form an integral portion thereof.

It is an object of embodiments disclosed herein to provide an improved cushioning apparatus that is more aesthetically pleasing.

These and other objects and advantages of disclosed embodiments shall become apparent from the ensuing figures and descriptions of the invention.

### C. SUMMARY OF THE INVENTION

A cushioning apparatus utilizing a pocket arrangement wherein the pockets are filled with non-unitary, discrete, granular viscoelastic foam to provide for greater pressure and temperature sensitivity. The cushioning apparatus of the present invention can be detachably or permanently affixed as a cover or topper on mattresses, chairs, stools, benches and the like, further being capable of incorporation into a mattress structure to thereby form an integral portion thereof.

### D. BRIEF DESCRIPTION OF THE FIGURES

**FIG 1** is a preferred embodiment of the cushioning apparatus of the present invention in the form of a mattress topper.
**FIG 2** presents a cross sectional view of the cushioning apparatus depicting the granular viscoelastic filler material situated within the chambers of the cushioning apparatus.
**FIG 3** presents a preferred embodiment of the pockets or chambers of the cushioning apparatus of the present invention.
**FIG 4** shows a preferred embodiment of the cushioning apparatus in the form of an integral top layer of a mattress structure, and as a stool cover, respectively.
**FIG 5** shows a preferred embodiment of the granular viscoelastic filler material of the present invention.

### E. DETAILED DESCRIPTION OF THE PREFERRED EMBODIMENTS OF THE INVENTION

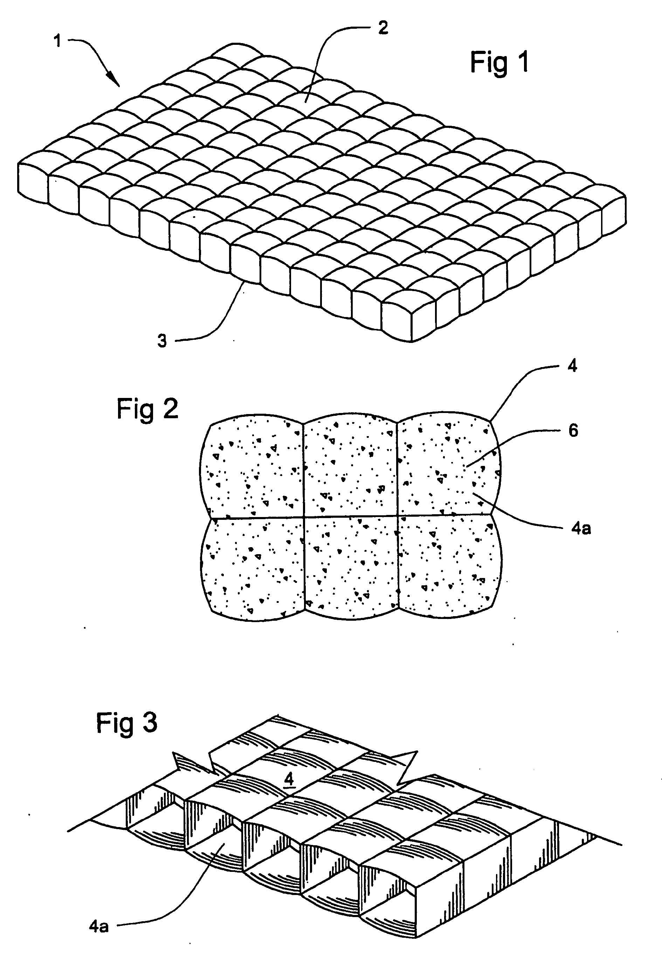

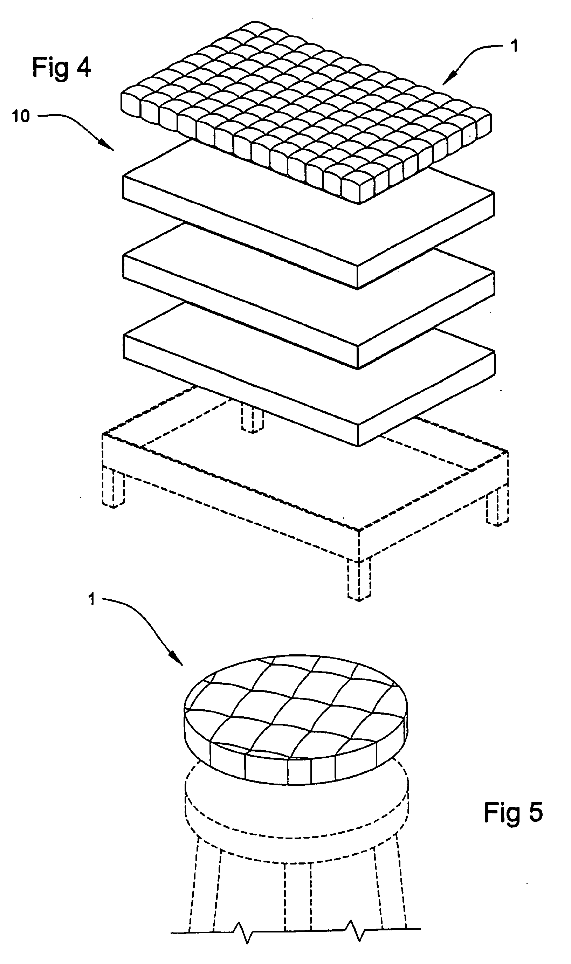

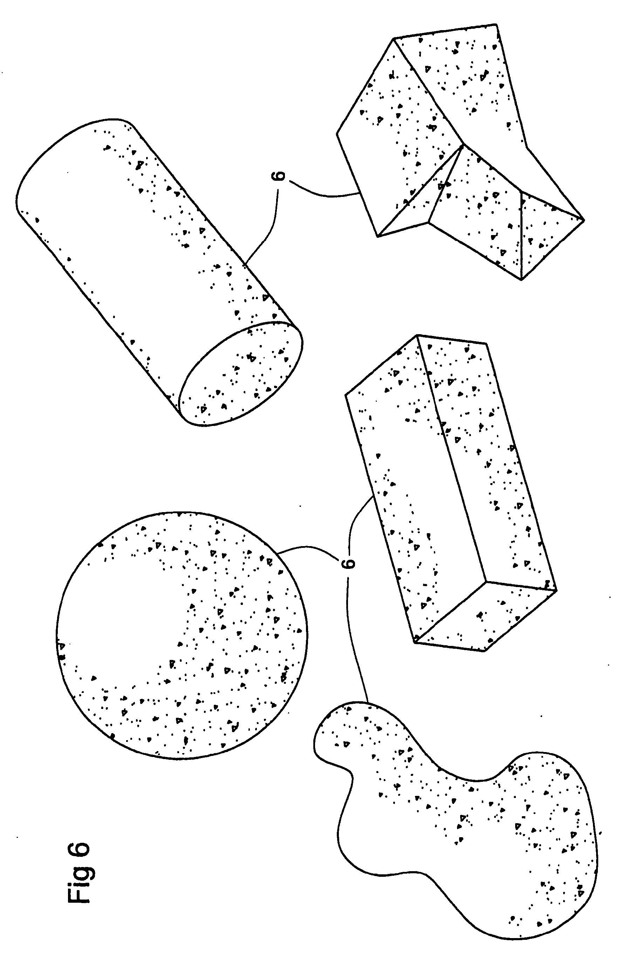

An improved duvet-design cushioning apparatus **1** to be utilized as a topper or cover for mattresses and/or box spring combinations, chairs, stools, and the like is disclosed. Although there exist a variety of different duvet designs that differ in manufacture and construction details, cushioning apparatus **1** of the present invention is not limited to a particular duvet design or duvet construction. In general, and as used herein, "duvet" refers to two pieces of any type of textile or non-woven material that are sewn together in a desired shape and provided with individual pockets or chambers having a filling. In a preferred embodiment, cushioning apparatus **1** of the present invention comprises an upper panel 2 and a lower panel **3.** Apparatus **1** may optionally comprise side panels, in accordance with desire. Upper and lower panels **2** and **3** are preferably of suitable size and configuration, e.g. round, rectangular, square, etc., to correspond to a given sleeping or sitting surface. The fabric material used to construct panels **2** and **3** will preferably be lightweight so as to minimize the weight of cushioning apparatus **1,** yet at the same time, provide for resilience, flexibility, and maximum durability. In a preferred embodiment, the inventor contemplates using plain woven all cotton fabric, however other fabric materials may also be utilized. In constructing apparatus **1,** panels **2** and **3,** and optionally side panels, are sewn to each other to form the desired structure, e.g. a square mattress topper, or a round seat cover. See Figures **1** and **4****.** Internal transverse and longitudinal seams further form a plurality of adjacent and individual chambers or pockets **4** within apparatus **1. See** **Figure 3****.** Chambers **4** can be of any shape desired, including square, rectangular, round, triangular, diamond, as well as any other shape commonly utilized in duvet construction. In a preferred embodiment, each chamber **4** defines an internal cavity **4a** designed to receive an improved filler material. **See** **Figures 2** and **3****.** As will be discussed in more detail below, the type of filler material to be utilized, as well the state or composition of the material, is a critical factor for user comfort as well as aesthetic appearance. A plurality of unstitched areas are left for blowing in the improved filler material into internal cavities **4a** of cushioning apparatus **1** at various angles, as is commonly done in duvet construction, these areas subsequently being sewn closed to contain the filler material. It is preferred that the improved filler material, a detailed discussion of which will ensue below, be situated immediately adjacent to panels **2** and **3,** with no intervening layers, such that the user's body is directly contacting improved filler material for enhanced comfort.

In a preferred embodiment, the preferred filler material of the present invention comprises viscoelastic foam **6.** Viscoelastic foam **6,** also known as memory foam, is a desirable filler material because it possesses pressure-sensitive and temperature-sensitive properties which allow for greater user comfort, as will be further discussed below. Viscoelastic foam is commonly available from manufacturers such as Tempurpedic, Foamex International, and Carpenter. In a further preferred embodiment, it is desired that the state or composition of the viscoelastic foam **6** be loose or granular, as opposed to unitary, the former state or composition having advantages over the latter, as also will be discussed below. This preferred composition can be achieved by shredding new viscoelastic material, or alternatively, by utilizing scrap viscoelastic material, to achieve both recycling and cost benefits.

In a preferred embodiment, discrete, granular viscoelastic foam filler material 6 will possess certain preferred properties in accordance with desire as well as intended usage of cushioning apparatus **1**. For example, in one preferred embodiment, when constructing cushioning apparatus **1** as a conventional size mattress cover, a suitable density of the granular viscoelastic foam **6** would be about 72 kg/m³ (4.5 pounds per cubic foot) to about 88 kg/m³ (5.5 per cubic foot); a suitable indentation load deflection (ILD) of the granular viscoelastic foam **6** would be about 3.6 kg (8 pounds) to about 5.0 kg (11 pounds), and a suitable thickness of the pocket or chamber filled with the filler material would be about 3.8 cm (1.5 inches) to about 5.1 cm (2 inches). In a further preferred embodiment, it is preferred that the viscoelastic foam pieces be generally spherical in shape, with each piece having a length (L), or longest dimension, greater than about 1.3 cm (0.5 inches). See **Figure 5****.** These aforementioned preferred ranges provide for an enhanced comfort level and necessary deflection of the granular viscoelastic foam **6** to enable this comfort level.

As another example, when constructing cushioning apparatus **1** as a conventional size stool cover, a suitable density of the granular viscoelastic foam **6** would be about 24 kg/m³ (1.5 lb/ft3) to about 130 kg/m³ (8 lb/ft3), a suitable indentation load deflection (ILD) of the granular viscoelastic foam **6** would be about 2.7 kg (6 lb) to about 8.2 kg (18 lb), and a suitable pocket or chamber thickness would be about 1.3 cm (0.5 inches) to about 13 cm (5 inches). In a further preferred embodiment, granular viscoelastic foam **6** will comprise non-uniform pieces of various shapes, including circular, triangular, flat, oblong, etc., with each piece having a length (L) or longest dimension of about 0.2 cm (.078 inches) to about 3.0 cm (1.17 inches) and a width (W) or shortest dimension of about 0.2 cm (.078 inches) to about 3.0 cm (1.17 inches). See **Figure 5****.** Again, these preferred ranges provide for an enhanced comfort level and necessary deflection of the granular viscoelastic foam **6.**

It should be noted that the filler material of the present invention need not consist only of granular visoelastic foam **6** and that other filler materials may also be utilized, in accordance with what is desired. For example, in one preferred embodiment, the filler material can comprise granular viscoelastic foam **6** in combination with other materials including, but not limited to, polystyrene beads, polyester fiber balls, micro denier, latex foam, polyurethane foam, feathers, cotton, as well as any other conventional filler material commonly utilized in the art. If the filler material is to be formed from a combination of granular visocelastic foam **6** with such materials, it is preferred that granular visocelastic foam **6** comprise at least about 25% of the total filler material by weight.

In application, cushioning apparatus **1** can be utilized in a plethora of different settings in a variety of different manners. See **Figures 1** and **4****.** For example, cushioning apparatus **1** can be affixed to the surface of a mattress, chair, stool etc., as a cover or topper thereof such that granular viscoelastic foam **6** is in contact with the user's body for enhanced temperature and pressure-sensitive properties, as discussed below. Cushioning apparatus **1** may be permanently affixed to the desired sleeping or sitting surface such that it forms an integral cover or topper thereof, alternatively, cushioning apparatus **1** may be detachably fitted, to the desired sleeping or sitting surface utilizing means commonly known in the art, for e.g. such as elastic straps or elastic edges to fit under the desired surface, or via mechanical devices such as hook and loop fasteners, magnetic snaps, buttons and button eyelets, etc.

In use, cushioning apparatus **1** of the present invention provides for enhanced user comfort due to the improved filler material utilized within the pocket arrangement. As mentioned above, viscoelastic filler material is the desired filler material because it possesses pressure-sensitive and temperature-sensitive properties, which allows cushioning apparatus **1** to better conform to the user's body when the user is sitting or lying down on apparatus **1.** These properties are enhanced when the material is in the granular form. As apparatus **1** is comprised of granular viscoelastic foam **6,** as opposed to a single unitary solid slab of same, this provides for more individualized areas of pressure-sensitivity, in turn allowing for a better contouring and support in response to the force exerted by the user's body. In addition, the granular composition of viscoelastic foam **6** is further beneficial as it allows for more passageways for air circulation. viscoelastic material is generally temperature-sensitive i.e. breathable, however when viscoelastic material is in a sold slab form, this property is compromised as there is minimal space for air to circulate and as a result, heat flow to the outside of the material is inhibited. In contrast, when viscoelastic material is in granular form, breathability is increased, such that heat and moisture are not trapped within cushioning apparatus **1,** further increasing the user's comfort. Furthermore, when the granular viscoelastic foam **6** is contained within a plurality of individual pockets or chambers **4,** as is the case for apparatus **1,** as opposed to being contained within in a single cavity, this provides for greater user comfort. Utilizing multiple chambers **4** allows for a pre-measured amount of the granular viscoelastic foam 6 to be evenly divided throughout apparatus **1,** and thus allows for more control of the placement of the foam **6.** As a result, there is less shifting of the filler material and user comfort is enhanced. Finally, the duvet design of apparatus **1** provides for an esthetically pleasing appearance, as the individual plump pockets **4** confer a more plush and luxurious look, over other types of prior art cover or topper designs.

As discussed above, in a preferred embodiment cushioning apparatus 1 can be utilized as a cover or topper for a given sitting or sleeping surface area. However, in another preferred embodiment, apparatus **1** can also be integrally incorporated into the mattress structure 10 itself to form a portion thereof. See **Figure 4**. That is, apparatus **1**, constructed in the fashion discussed above, and comprising individual pockets **4** filled with an improved granular viscoelastic foam filler material **6**, can be incorporated within the framework of a conventional foam and/or spring design mattresses containing slab layers of polyurethane foam, latex foam, viscoelastic foam, etc., as well as any combinations of the foregoing, to form an integral top-layer and/or sub-layer thereof. For example, such a preferred mattress structure **10** could be constructed to have apparatus **1** as a top layer, i.e. an integral, duvet-design top-layer comprising granular viscoelastic foam **6** for breathability and responsive contouring to user-body movements; a first slab layer of high-density viscoelastic foam for additional contouring; a second slab layer of firm, high-resilience polyurethane foam, and a third and firmer slab layer of high-resilience polyurethane slab for support. In such a scenario, and assuming cushioning apparatus **1** to be a conventional size mattress layer, a suitable density of the granular viscoelastic foam **6** would be about 60 kg/m³ (4 lb/ft3) to about 100 kg/m³ (6 lb/ft3), a suitable indentation load deflection (ILD) of the granular viscoelastic foam **6** would be about 3.6 kg (8lb) to about 6.4 kg (14lb), and a suitable pocket or chamber thickness due to the filler material would be about 5.1 cm (2 inches) to about 10 cm (4 inches), with granular viscoelastic foam **6** including non-uniform pieces of various shapes having a length (L) or longest dimension of about 1.0 cm (.39 inches) to about 3.0 cm (1.17 inches), and having a width (W) or shortest dimension of about 1.0 cm (.39 inches) to about 3.0 cm (1.17 inches).

While the invention has been described in terms of its preferred embodiment, other embodiments will be apparent to those of skill in the art from a review of the foregoing. Those embodiments as well as the preferred embodiments are intended to be encompassed by the scope and spirit of the following claims.

## Claims

1. A cushioning apparatus (1) comprising:
a plurality of panels (2, 3) secured together in the desired shape of the apparatus;
the apparatus further comprising a plurality of chambers (4), wherein each chamber (4) defines an internal cavity (4a) having filler material comprising granular viscoelastic foam (6), wherein the granular viscoelastic foam:
is situated immediately adjacent to the panels;
has a density between about 24 kg/m³ (1.5 pounds per cubic foot) and about 130 kg/m³ (8 pounds per cubic foot);
has an indentation load deflection value between about 2.7 kg (6 pounds) and about 8.2 kg (18 pounds); and
comprises pieces having a length of between about 0.20 cm (0.078 inches) and about 3.0 cm (1.17 inches).

2. A cushioning apparatus according to claim 1, wherein the apparatus is configured to be detachably/permanently affixed to a desired sitting surface.

3. A cushioning apparatus according to claim 1, wherein the apparatus is configured to be detachably/permanently affixed to a mattress surface.

4. A cushioning apparatus according to claim 1, wherein the apparatus is configured to be permanently affixed within a mattress structure as an integral layer thereof.

5. A cushioning apparatus according to claim 1, wherein the filler material further includes a material selected from the group consisting of polystyrene beads, polyester fiber balls, micro denier, latex foam, polyurethane foam, feathers, and cotton.

6. A cushioning apparatus according to claim 1, wherein the granular viscoelastic foam comprises at least about 25% of the filler material by weight.

7. A method of manufacturing an improved cushioning apparatus (1) comprising the steps of:
providing a plurality of panels (2, 3) secured together in the desired shape of the apparatus;
providing a plurality of chambers (4) within the apparatus, with each chamber defining an internal cavity (4a) designed to receive filler material;
inserting filler material comprising granular viscoelastic foam (6) into each cavity;
sealing the filler material within the cavities,
wherein the granular viscoelastic foam:
is situated immediately adjacent to the panels;
has a density between about 24 kg/m³ (1.5 pounds per cubic foot) and about 130 kg/m³ (8 pounds per cubic foot);
has an indentation load deflection value between about 2.7 kg (6 pounds) and about 8.2 kg (18 pounds); and
comprises pieces having a length of between about 0.2 cm (0.078 inches) and about 3.0 cm (1.17 inches).

8. The method of manufacturing according to claim 7, wherein the cushioning apparatus is configured to be received on a given sleeping/sitting surface area.

9. The method of manufacturing according to claim 7, wherein the cushioning apparatus is configured to be permanently affixed within a mattress structure as an integral layer thereof.

10. The method of manufacturing according to claim 7, wherein the filler material in the cushioning apparatus further includes a material selected from the group consisting of polystyrene beads, polyester fiber balls, micro denier, latex foam, polyurethane foam, feathers, and cotton.

11. The method of manufacturing according to claim 7, wherein the granular viscoelastic foam in the cushioning apparatus comprises at least about 25% of the filler material by weight.

## Patentansprüche

1. Eine Polstervorrichtung (1) mit:
einer Vielzahl von Bahnen (2, 3), die aneinander in der gewünschten Form der Vorrichtung festgelegt sind,
wobei die Vorrichtung ferner eine Vielzahl von Kammern (4) aufweist, wobei jede Kammer (4) einen internen Hohlraum (4a) mit einem Füllmaterial definiert, welches einen granularen viskoelastischen Schaum (6) umfasst, wobei der granulare viskoelastische Schaum:
unmittelbar angrenzend an die Bahnen gelegen ist,
eine Dichte zwischen etwa 24 kg/m³ (1,5 Pfund pro Kubikfuß) und etwa 130 kg/m³ (8 Pfund pro Kubikfuß) besitzt,
einen Eindrück-Last-Auslenkwert zwischen etwa 2,7 kg (6 Pfund) und etwa 8,2 kg (18 Pfund) besitzt, und
Teile mit einer Länge von zwischen etwa 0,2 cm (0,078 Inch) und etwa 3,0 cm (1,17 Inch) aufweist.

2. Eine Polstervorrichtung gemäß Anspruch 1, wobei die Vorrichtung konfiguriert ist, um abnehmbar/permanent an einer gewünschten Sitzfläche befestigt zu werden.

3. Eine Polstervorrichtung gemäß Anspruch 1, wobei die Vorrichtung konfiguriert ist, um abnehmbar/permanent an einer Matratzenfläche befestigt zu werden.

4. Eine Polstervorrichtung gemäß Anspruch 1, wobei die Vorrichtung konfiguriert ist, um permanent innerhalb einer Matratzenstruktur als eine integrale Schicht derselben befestigt zu werden.

5. Eine Polstervorrichtung gemäß Anspruch 1, wobei das Füllmaterial ferner ein Material umfasst, das aus der Gruppe ausgewählt ist, die aus Polystyrenperlen, Polyester-Faserkugeln, Mikrodenier, Latexschaum, Polyurethanschaum, Federn und Baumwolle besteht.

6. Eine Polstervorrichtung gemäß Anspruch 1, wobei der granulare viskoelastische Schaum mindestens etwa 25% des Füllmaterials gemäß Gewicht umfasst.

7. Ein Verfahren zur Herstellung einer verbesserten Polstervorrichtung (1) mit den Schritten:
Vorsehen einer Vielzahl von Bahnen (2, 3), die in der gewünschten Form der Vorrichtung aneinander festgelegt sind,
Vorsehen einer Vielzahl von Kammern (4) innerhalb der Vorrichtung, wobei jede Kammer einen internen Hohlraum (4a) definiert, der ausgestaltet ist, um ein Füllmaterial aufzunehmen,
Einbringen von Füllmaterial mit einem granularen viskoelastischen Schaum (6) in jeden Hohlraum,
Einschließen des Füllmaterials in den Hohlräumen,
wobei der granulare viskoelastische Schaum:
unmittelbar angrenzend an die Bahnen gelegen ist, eine Dichte zwischen etwa 24 kg/m³ (1,5 Pfund pro Kubikfuß) und etwa 130 kg/m³ (8 Pfund pro Kubikfuß) besitzt,
einen Eindrück-Last-Auslenkwert zwischen etwa 2,7 kg (6 Pfund) und etwa 8,2 kg (18 Pfund) besitzt, und
Teile mit einer Länge von zwischen etwa 0,2 cm (0,078 Inch) und etwa 3,0 cm (1,17 Inch) aufweist.

8. Das Verfahren zur Herstellung gemäß Anspruch 7, wobei die Polstervorrichtung konfiguriert ist, um auf einem vorgegebenen Schlaf-/Sitzflächenbereich aufgenommen zu werden.

9. Das Verfahren zur Herstellung gemäß Anspruch 7, wobei die Polstervorrichtung konfiguriert ist, um permanent innerhalb einer Matratzenstruktur als eine integrale Schicht derselben befestigt zu werden.

10. Das Verfahren zur Herstellung gemäß Anspruch 7, wobei das Füllmaterial in der Polstervorrichtung ferner ein Material aufweist, das aus der Gruppe ausgewählt wird, die aus Polystyrenperlen, Polyester-Faserkugeln, Mikrodenier, Latexschaum, Polyurethanschaum, Federn und Baumwolle besteht.

11. Das Verfahren zur Herstellung gemäß Anspruch 7, wobei der granulare viskoelastische Schaum in der Polstervorrichtung mindestens etwa 25% des Füllmaterials gemäß Gewicht aufweist.

## Revendications

1. Appareil de matelassage (1) comprenant :
une pluralité de panneaux (2, 3) assujettis ensemble dans la forme souhaitée de l'appareil ;
l'appareil comprenant en outre une pluralité de chambres (4), dans lequel chaque chambre (4) définit une cavité interne (4a) comportant un matériau de remplissage comprenant une mousse viscoélastique granulaire (6), dans lequel la mousse viscoélastique granulaire :
est située immédiatement adjacente aux panneaux ;
a une masse volumique entre environ 24 kg/m³ (1,5 livre par pied cube) et environ 130 kg/m³ (8 livres par pied cube) ;
a une valeur d'indentation entre environ 2,7 kg (6 livres) et environ 8,2 kg (18 livres) ; et
comprend des morceaux ayant une longueur comprise entre environ 0,20 cm (0,078 pouce) et environ 3,0 cm (1,17 pouce).

2. Appareil de matelassage selon la revendication 1, dans lequel l'appareil est configuré pour être fixé de façon détachable/permanente à une surface d'assise souhaitée.

3. Appareil de matelassage selon la revendication 1, dans lequel l'appareil est configuré pour être fixé de façon détachable/permanente à une surface de matelas.

4. Appareil de matelassage selon la revendication 1, dans lequel l'appareil est configuré pour être fixé de façon permanente au sein d'une structure de matelas en tant que couche solidaire de celle-ci.

5. Appareil de matelassage selon la revendication 1, dans lequel le matériau de remplissage inclut en outre un matériau choisi dans le groupe consistant en les billes de poly(styrène), les balles de fibre de poly(ester), un microdenier, la mousse de latex, la mousse de poly(uréthane), les plumes et le coton.

6. Appareil de matelassage selon la revendication 1, dans lequel la mousse viscoélastique granulaire comprend au moins environ 25 % du matériau de remplissage en poids.

7. Procédé de fabrication d'un appareil de matelassage amélioré (1) comprenant les étapes de :
fourniture d'une pluralité de panneaux (2, 3) assujettis ensemble dans la forme souhaitée de l'appareil ;
fourniture d'une pluralité de chambres (4) au sein de l'appareil, chaque chambre définissant une cavité interne (4a) conçue pour recevoir un matériau de remplissage ;
insertion du matériau de remplissage comprenant la mousse viscoélastique granulaire (6) dans chaque cavité ;
scellement du matériau de remplissage au sein des cavités,
dans lequel la mousse viscoélastique granulaire :
est située immédiatement adjacente aux panneaux ;
a une masse volumique entre environ 24 kg/m³ (1,5 livre par pied cube) et environ 130 kg/m³ (8 livres par pied cube) ;
a une valeur d'indentation entre environ 2,7 kg (6 livres) et environ 8,2 kg (18 livres) ; et
comprend des morceaux ayant une longueur comprise entre environ 0,2 cm (0,078 pouce) et environ 3,0 cm (1,17 pouce).

8. Procédé de fabrication selon la revendication 7, dans lequel l'appareil de matelassage est configuré pour être reçu sur une surface de sommeil/d'assise donnée.

9. Procédé de fabrication selon la revendication 7, dans lequel l'appareil de matelassage est configuré pour être fixé de façon permanente au sein d'une structure de matelas en tant que couche solidaire de celle-ci.

10. Procédé de fabrication selon la revendication 7, dans lequel le matériau de remplissage comprend en outre un matériau choisi dans le groupe consistant en les billes de poly(styrène), les balles de fibre de poly(ester), un microdenier, la mousse de latex, une mousse de poly(uréthane), les plumes et le coton.

11. Procédé de fabrication selon la revendication 7, dans lequel la mousse viscoélastique granulaire dans l'appareil de matelassage comprend au moins environ 25 % du matériau de remplissage en poids.
